# EUROPEAN PATENT SPECIFICATION

(11) **EP 0 625 416 B1**
(45) Date of publication and mention of the grant of the patent: **08.10.1997**
(21) Application number: 94303631.9
(22) Date of filing: 20.05.1994
(51) Int. Cl.: B28D 1/12, B23P 15/28

(54) **Saw chain cutter link**
Sägekettenschneidglied
Maillon de coupe pour chaîne à scier

(30) Priority: 21.05.1993 GB 9310500
(43) Date of publication of application: 23.11.1994
(73) Proprietor: DE BEERS INDUSTRIAL DIAMOND DIVISION (PROPRIETARY) LIMITED, Johannesburg, Transvaal (ZA)
(72) Inventor: Clark, Ian Eric, Camberley Surrey (GB)
(74) Representative: Senior, Alan Murray

(56) References cited:
- EP-A- 0 028 418
- EP-A- 0 295 946
- EP-A- 0 468 214
- EP-A- 0 506 238
- FR-A- 2 521 061

## Description

This invention relates to chain saws and the manufacture of chain saw links.

A conventional chain saw has an endless chain composed of pivotally interconnected links, and a motor for driving the chain. The links of the chain carry cutting inserts which perform a cutting action in use. The cutting inserts are generally made of steel and are rapidly blunted.

It is an object of the present invention to provide a novel form of chain saw link which will have greater longevity than known links.

EP-A-0 468 214 discloses a cutting insert which can be used in chain saws. The insert has a support member, typically of a carbide, and a series of cutting members attached to the support members. The cutting members are rectangular in shape and are made throughout as an abrasive compact, typically a compact of polycrystaline diamond (PCD) or cubic boron nitride (PCBN).

EP-A-0 028 418, upon which the preambles of the independent claims are based, discloses a chain saw link in which cutting inserts of round or e.g. polygonal shape are secured to the body of the link. The cutting inserts are formed as composite PCD compacts.

EP-A-0 295 946 discloses a twist drill formed with seats in which cutting inserts are bonded so as to perform a cutting action. Each insert is provided by a segment of a slice cut from a composite abrasive compact, typically PCD.

According to a first aspect of the present invention there is provided a chain saw link which is connectable to other similar chain saw links to form a chain, the chain saw link comprising a link body and, fastened to the link body, at least one cutting insert in the form of a segment cut from a composite PCD or PCBN compact such that the cutting insert has a PCD or PCBN compact carried by a carbide backing, characterised in that:
the PCD or PCBN compact of the cutting insert extends along an edge of the cutting insert and presents a straight, acute-angled cutting tip which is transverse to the direction of chain movement in use, and
the carbide backing of the cutting insert is fastened to an upstanding shoulder on the link body such that the acute-angled cutting tip projects above the shoulder to perform a cutting action in use.

Preferably each cutting insert is in the form of a segment cut from a slice of a composite PCD or PCBN compact which has parallel, major surfaces, the slice itself being formed between parallel slice lines cut through the composite PCD or PCBN compact at an acute angle to the major surfaces thereof.

The chain saw link may comprise a pair of identical cutting inserts fastened to the link body in side-by-side relationship. The cutting inserts are conveniently fastened to the link body by means of screws passing through the inserts and engaged in tapped holes in the link body, or by brazing.

The invention may extend to a chain saw comprising a chain which includes chain saw links as summarised above.

According to a second aspect of the present invention there is provided a method of manufacturing a chain saw link which is connectable to other similar chain saw links to form a chain, the chain saw link comprising a link body and, fastened to the link body, at least one cutting insert in the form of a segment cut from a composite PCD or PCBN compact such that the cutting insert has a PCD or PCBN compact carried by a carbide backing, characterised by the following steps:
manufacturing the cutting insert by cutting an elongate slice from a composite PCD or PCBN compact which is of flat proportions, which has opposed major surfaces and which has a PCD or PCBN compact forming one of the major surfaces on a carbide backing forming the other major surface, the slice being defined between parallel cutting lines extending through the composite compact at an acute angle to the major surfaces, and cutting off a portion of the length of the slice to form a cutting insert in which the PCD or PCBN compact of the cutting insert extends along an edge of the cutting insert and presents a straight, acute-angled cutting tip, and
fastening the carbide backing of the cutting insert to an upstanding shoulder on the link body such that the acute-angled cutting tip extends in a direction transverse to the direction of chain movement and projects above the shoulder to perform a cutting action, in use.

The invention will now be described in more detail, by way of example only, with reference to the accompanying drawings in which:
- **Figure 1**: illustrates diagrammatically how a blank is sliced up in the production of the cutting inserts used in the chain saw link of Figures 3 and 4;
- **Figure 2**: shows a side view of the blank seen in Figure 1;
- **Figure 3**: shows a side view of a link of a chain saw; and
- **Figure 4**: shows a front view of the chain saw link.

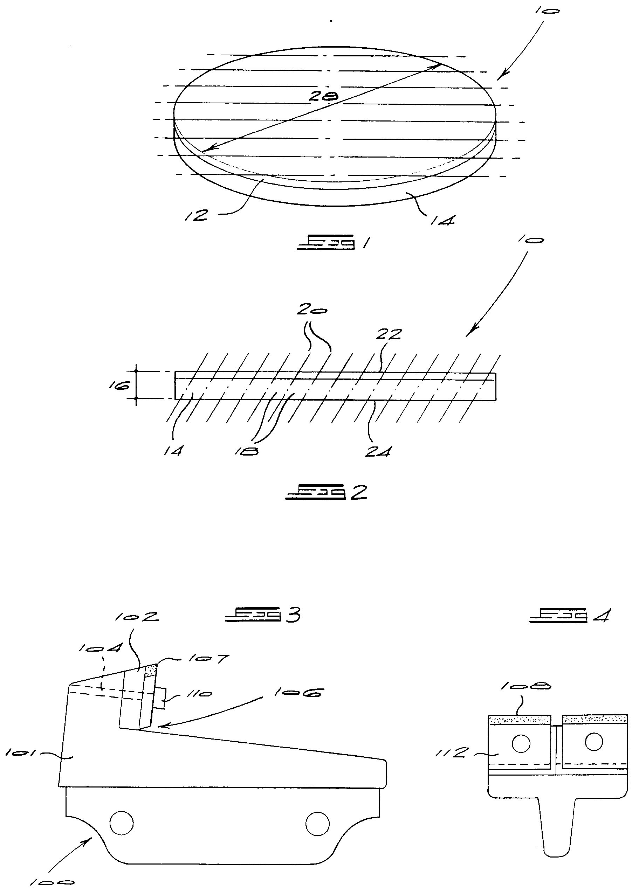

Figures 1 and 2 illustrate a blank 10 from which a great number of cutting inserts for use in chain saw links can be produced in accordance with the invention. The blank in this case is a SYNDITE (trade mark) blank which is of generally circular shape and which is manufactured by the applicant. The SYNDITE blank is a composite PCD compact consisting of a thin PCD compact 12 bonded to a thicker tungsten carbide backing 14, and it typically has a thickness 16 of about 8mm.

To produce cutting inserts for use as described below, the blank 10 is cut into slices 18 along slice lines 20 which are at acute angles to the major surfaces 22 and 24 of the blank, as will be apparent from Figure 2.

The SYNDITE blank 10 may have a substantial nominal diameter 28, typically of up to 70mm. The elongate slices 18 which are produced using the slicing technique just described are then cut up lengthwise to form cutting inserts of appropriate dimension for use in a chain saw link, as described below.

Figures 3 and 4 show a single link or tooth 100 of a chain saw. The link has a link body 101 made of steel. The link 100 includes a pair of backing members 102 formed with holes which align with tapped holes 104 in a shoulder portion 105 of the link body. Cutting inserts 106 are clamped to the link body, via the backing members 102, by means of screws 110 which pass through holes in the cutting inserts and backing members and are threaded into the tapped holes 104.

The cutting inserts 106 are arranged to present cutting tips 107 which are exposed relative to the link body 101, to as to perform a cutting action in use. Each of the two identical cutting inserts of the chain saw link 100 has a PCD compact 108 on a tungsten carbide backing 112. The compact 108 in each case presents the exposed cutting tip 107.

The inserts are formed in the manner described above with reference to Figures 1 and 2, i.e. acute angle slices are formed in a SYNDITE blank and the slices are then cut into appropriate lengths. Thereafter the holes are formed in the cutting inserts to take the screws 110.

It should be noted that instead of a PCD compact providing the cutting tip of the cutting insert as described above, the cutting insert could have a PCBN (polycrystalline cubic boron nitride) compact which provides the cutting tip.

Although reference is made in this specification to the slicing of a single PCD or PCBN composite compact or blank to produce the cutting inserts which are then used in the chain saw link, it will readily be appreciated that in practice it is not necessary that all of the cutting inserts in the chain of a chain saw, or even both inserts of one link, emanate from the same original composite compact. The invention also embraces the situation where cutting inserts emanating from different composite compacts are used in the same chain saw link or chain.

In the embodiment described above, the cutting inserts are fastened releasably to the link body by screws. In other embodiments, one or more inserts could be permanently fastened in position by brazing.

Alternatively different releasable clamping techniques could be used.

Also, while specific mention has been made of a SYNDITE blank as the source for the cutting elements, it should be noted that the invention is in no way limited to the use of this particular form of blank. In other embodiments, different PCD or PCBN composite compacts could be used as a source for the cutting inserts.

## Claims

1. A chain saw link which is connectable to other similar chain saw links to form a chain, the chain saw link comprising a link body and, fastened to the link body, at least one cutting insert in the form of a segment cut from a composite PCD or PCBN compact such that the cutting insert has a PCD or PCBN compact carried by a carbide backing, characterised in that:
- the PCD or PCBN compact of the cutting insert (106) extends along an edge of the cutting insert and presents a straight, acute-angled cutting tip (107) which is transverse to the direction of chain movement in use, and
- the carbide backing of the cutting insert (106) is fastened to an upstanding shoulder (105) on the link body (101) such that the acute-angled cutting tip (107) projects above the shoulder (105) to perform a cutting action in use.

2. A chain saw link according to claim 1 characterised in that the cutting insert (106) has a non-rectangular parallelogram shape in a cross-section normal to the cutting tip (107).

3. A chain saw link according to either one of the preceding claims characterised in that the carbide backing of the cutting insert (106) is fastened to the shoulder (105) of the link body (101) by means of a screw (110) passing through the carbide backing and engaged in a tapped hole (104) in the shoulder (105).

4. A chain saw link according to either one of claims 1 or 2 characterised in that the carbide backing of the cutting insert (106) is fastened to the shoulder (105) of the link body (101) by brazing.

5. A chain saw link according to any one of the preceding claims characterised in that two identical cutting inserts (106) are fastened to the shoulder (105) of the link body (101) in side-by-side relationship with the cutting tips (107) of their PCD or PCBN compacts aligned with one another.

6. A method of manufacturing a chain saw link which is connectable to other similar chain saw links to form a chain, the chain saw link comprising a link body and, fastened to the link body, at least one cutting insert in the form of a segment cut from a composite PCD or PCBN compact such that the cutting insert has a PCD or PCBN compact carried by a carbide backing, characterised by the following steps:
- manufacturing the cutting insert (106) by cutting an elongate slice (18) from a composite PCD or PCBN compact (10) which is of flat proportions, which has opposed major surfaces (22, 24) and which has a PCD or PCBN compact (12) forming one of the major surfaces (22) on a carbide backing (14) forming the other major surface (24), the slice (18) being defined between parallel cutting lines (20) extending through the composite compact (10) at an acute angle to the major surfaces (22, 24), and cutting off a portion of the length of the slice (18) to form a cutting insert (106) in which the PCD or PCBN compact of the cutting insert extends along an edge of the cutting insert and presents a straight, acute-angled cutting tip (107), and
- fastening the carbide backing of the cutting insert (106) to an upstanding shoulder (105) on the link body (101) such that the acute-angled cutting tip (107) extends in a direction transverse to the direction of chain movement and projects above the shoulder (105) to perform a cutting action, in use.

7. A method according to claim 6 characterised in that carbide backing of the cutting insert (106) is fastened to the shoulder (105) on the link body (101) by a screw (110) passing through the carbide backing and into a tapped hole (104) in the shoulder (105).

8. A method according to claim 6 characterised in that the carbide backing of the cutting insert (106) is fastened to the shoulder (105) on the link body (101) by brazing.

9. A method according to any one of claims 6 to 8 characterised in that two identical cutting inserts (106) are fastened in side-by-side relationship to the shoulder (105) on the link body (101) with their cutting tips (107) aligned with one another.

## Patentansprüche

1. Kettensägenglied, das mit anderen ähnlichen Kettensägengliedern zur Bildung einer Kette verbindbar ist, wobei das Kettensägenglied einen Gliedkörper und wenigstens einen an dem Gliedkörper befestigten Schneideinsatz in Form eines Segments aufweist, das aus einem Verbund-PCD- oder -PCBN-Kompakt derart geschnitten ist, daß der Schneideinsatz einen von einem Carbidträger getragenen PCD- oder PCBN-Kompakt aufweist, dadurch gekennzeichnet, daß
- der PCD- oder PCBN-Kompakt des Schneideinsatzes (106) sich entlang einem Rand des Schneideinsatzes erstreckt und eine gerade, spitzwinklige Schneidspitze (107) aufweist, die beim Gebrauch quer zur Kettenbewegungsrichtung verläuft, und
- der Carbidträger des Schneideinsatzes (106) an einer aufragenden Schulter (105) des Gliedkörpers (101) derart befestigt ist, daß die spitzwinklige Schneidspitze (107) über die Schulter (105) hinausragt, um im Gebrauch einen Schneidvorgang durchzuführen.

2. Kettensägenglied nach Anspruch 1, dadurch gekennzeichnet, daß der Schneideinsatz (106) in senkrecht zur Schneidspitze (107) verlaufendem Querschnitt die Form eines nicht rechteckigen Parallelogramms aufweist.

3. Kettensägenglied nach einem der vorhergehenden Ansprüche, dadurch gekennzeichnet, daß der Carbidträger des Schneideinsatzes (106) an der Schulter (105) des Gliedkörpers (101) mittels einer durch den Carbidträger verlaufenden Schraube (110) befestigt ist, welche in ein Gewindeloch (104) in der Schulter (105) eingreift.

4. Kettensägenglied nach einem der Ansprüche 1 oder 2, dadurch gekennzeichnet, daß der Carbidträger des Schneideinsatzes (106) an der Schulter (105) des Gliedkörpers (101) durch Löten befestigt ist.

5. Kettensägenglied nach einem der vorhergehenden Ansprüche, dadurch gekennzeichnet, daß zwei identische Schneideinsätze (106) an der Schulter (105) des Gliedkörpers (101) nebeneinanderliegend befestigt sind, wobei die Schneidspitzen (107) ihrer PCD- und PCNB-Kompakte miteinander fluchten.

6. Verfahren zur Herstellung eines Kettensägengliedes, das mit anderen ähnlichen Kettensägengliedern zur Bildung einer Kette verbindbar ist, wobei das Kettensägenglied einen Gliedkörper und wenigstens einen an dem Gliedkörper befestigten Schneideinsatz in Form eines Segments aufweist, das aus einem Verbund-PCD- oder -PCBN-Kompakt derart geschnitten ist, daß der Schneideinsatz einen von einem Carbidträger getragenen PCD- oder PCBN-Kompakt aufweist, gekennzeichnet durch die folgenden Schritte:
- Herstellen des Schneideinsatzes (106) durch Schneiden einer länglichen Scheibe (18) aus einem Verbund-PCD- oder -PCBN-Kompakt (10) mit flachen Proportionen, die gegenüberliegende Hauptflächen (22, 24) aufweist und einen PCD- oder PCBN-Kompakt (10), der eine der Hauptflächen (22) bildet, auf einem Carbidträger (14) aufweist, der die andere Hauptfläche (24) bildet, wobei die Scheibe (18) zwischen parallelen Schnittlinien (20), die sich in spitzem Winkel zu den Hauptflächen (22, 24) durch den Verbundkompakt (10) erstrecken, definiert ist, und Abschneiden eines Teils der Länge der Scheibe (18) zur Bildung eines Schneideinsatzes (106), bei dem sich der PCD- oder PCBN-Kompakt des Schneideinsatzes entlang einem Rand des Schneideinsatzes erstreckt und eine gerade spitzwinklige Schneidspitze (107) aufweist, und
- Befestigen des Carbidträgers des Schneideinsatzes (106) an einer aufragenden Schulter (105) des Gliedkörpers (101), derart, daß die spitzwinklige Schneidspitze (107) sich in einer Richtung erstreckt, die quer zur Kettenbewegungsrichtung verläuft und über die Schulter (105) hinausragt, um im Gebrauch einen Schneidvorgang durchzuführen.

7. Verfahren nach Anspruch 6, dadurch gekennzeichnet, daß der Carbidträger des-Schneideinsatzes (106) an der Schulter (105) des Gliedkörpers (101) mittels einer durch den Carbidträger verlaufenden Schraube (110) befestigt ist, welche in ein Gewindeloch (104) in der Schulter (105) eingreift.

8. Verfahren nach Anspruch 6, dadurch gekennzeichnet, daß der Carbidträger des Schneideinsatzes (106) an der Schulter (105) des Gliedkörpers (101) durch Löten befestigt ist.

9. Verfahren nach einem der Ansprüche 6 bis 8, dadurch gekennzeichnet, daß zwei identische Schneideinsätze (106) an der Schulter (105) des Gliedkörpers (101) nebeneinanderliegend befestigt sind, wobei die Schneidspitzen (107) ihrer PCD- und PCNB-Kompakte miteinander fluchten.

## Revendications

1. Maillon de chaîne à scier pouvant être raccordé à d'autres maillons de chaîne à scier similaires pour former une chaîne, le maillon de chaîne à scier comprenant un corps de maillon et, fixé sur le corps de maillon, au moins un insert de coupe sous forme d'un segment découpé à partir d'un corps compact PCD ou PCBN composite de telle sorte que l'insert de coupe présente un corps compact PCD ou PCBN monté sur un support de carbure, caractérisé en ce que :
le corps compact PCD ou PCBN de l'insert de coupe (106) s'étend le long d'un bord de l'insert de coupe et présente une pointe de coupe droite à angle aigu (107) transversale à la direction du mouvement de la chaîne dans l'utilisation, et
le support de carbure de l'insert de coupe (106) est fixé sur un épaulement vertical (105) sur le corps de maillon (101) de telle sorte que la pointe de coupe à angle aigu (107) fait saillie au-dessus de l'épaulement (105) pour réaliser une opération de coupe dans l'utilisation.

2. Maillon de chaîne à scier selon la revendication 1, caractérisé en ce que l'insert de coupe (106) a une forme de parallélogramme non rectangulaire en section transversale perpendiculaire à la pointe de coupe (107).

3. Maillon de chaîne à scier selon l'une ou l'autre des revendications précédentes, caractérisé en ce que le support de carbure de l'insert de coupe (106) est fixé sur l'épaulement (105) du corps de maillon (101) au moyen d'une vis (110) traversant le support de carbure et s'engageant dans un trou taraudé (104) de l'épaulement (105).

4. Maillon de chaîne à scier selon l'une ou l'autre des revendications 1 ou 2, caractérisé en ce que le support de carbure de l'insert de coupe (106) est fixé sur l'épaulement (105) du corps de maillon (101) par brasage.

5. Maillon de chaîne à scier selon l'une quelconque des revendications précédentes, caractérisé en ce que deux inserts de coupe identiques (106) sont fixés sur l'épaulement (105) du corps de maillon (101) en relation côte à côte avec les pointes de coupe (107) de leur corps compact PCD ou PCBN alignées entre elles.

6. Procédé de fabrication d'un maillon de chaîne à scier qui peut être raccordé sur d'autres maillons de chaîne à scier similaires pour former une chaîne, le maillon de chaîne à scier comprenant un corps de maillon et, fixé sur le corps du maillon, au moins un insert de coupe sous forme d'un segment découpé à partir d'un corps compact PCD ou PCBN composite de telle sorte que l'insert de coupe présente un corps compact PCD ou PCBN monté sur un support de carbure, caractérisé par les étapes suivantes :
fabrication de l'insert de coupe (106) par découpe d'une tranche allongée (18) à partir d'un corps compact composite PCD ou PCBN (10) qui est de proportion plate avec des grandes surfaces opposées (22, 24) et qui présente un corps compact PCD ou PCBN (12) formant l'une des grandes surfaces (22) sur un support de carbure (14) formant l'autre grande surface (24), la tranche (18) étant définie entre des lignes de coupe parallèles (20) s'étendant à travers le corps compact composite (10) selon un angle aigu par rapport aux grandes surfaces (22, 24), et à découper une portion de la longueur de la tranche (18) pour former un insert de coupe (106) dans lequel le corps compact PCD ou PCBN de l'insert de coupe s'étend le long d'un bord de l'insert de coupe et présente une pointe de coupe droite, à angle aigu (107), et
fixer le support de carbure de l'insert de coupe (106) sur un épaulement vertical (105) sur le corps de maillon (101) de telle sorte que la pointe de coupe à angle aigu (107) s'étend dans une direction transversale à la direction du mouvement de la chaîne et fait saillie au-dessus de l'épaulement (105) pour réaliser une action de coupe dans l'utilisation.

7. Procédé selon la revendication 6, caractérisé en ce que le support de carbure de l'insert de coupe (106) est fixé sur l'épaulement (105) du corps de maillon (101) par une vis (110) traversant le support de carbure et dans un trou taraudé (104) de l'épaulement (105).

8. Procédé selon la revendication 6, caractérisé en ce que le support de carbure de l'insert de coupe (106) est fixé sur l'épaulement (105) du corps de maillon (101) par brasage.

9. Procédé selon l'une quelconque des revendications 6 à 8, caractérisé en ce que deux inserts de coupe identiques (106) sont fixés en relation côte à côte sur l'épaulement (105) du corps de maillon (101) avec leurs pointes de coupe (107) alignées l'une sur l'autre.
